# EUROPEAN PATENT APPLICATION

(11) **EP 4 779 840 A1**
(43) Date of publication of application: **22.07.2026**
(21) Application number: 24870451.2
(22) Date of filing: 11.09.2024
(51) Int. Cl.: H02J 7/34, H02J 9/06, G06F 1/30

(54) **POWER SUPPLY METHOD, POWER SUPPLY SYSTEM, AND CABINET**

(30) Priority: 25.09.2023 CN 202311247314; 13.10.2023 CN 202311331871
(71) Applicant: HUAWEI TECHNOLOGIES CO., LTD., Shenzhen 518129 (CN)
(72) Inventor: CAO, Jun, Shenzhen, Guangdong 518129 (CN); GAO, Junen, Shenzhen, Guangdong 518129 (CN)
(74) Representative: Gill Jennings & Every LLP
(86) International application number: PCT/CN2024/118316
(87) International publication number: WO 2025/066907

(57) **Abstract**

A power supply method, a power supply system, and a cabinet are disclosed. The method is applied to a power supply system. The power supply system includes a PSU and a burst power supply module, and both the PSU and the burst power supply module are connected to a bus of the cabinet. The method includes: detecting a status of the cabinet in which the power supply system is located; and when the status indicates that a transient power-supply event occurs in the cabinet, triggering, based on a transient power supply requirement, coordination between the PSU and the burst power supply module to supply power to the cabinet. The burst power supply module is additionally disposed in the power supply system in the cabinet. When the PSU supplies power to the cabinet at a constant power, the burst power supply module connected to the bus may obtain electric energy and store the electric energy. When a transient power-supply event occurs in the cabinet, the burst power supply module quickly supplements electric energy needed by the cabinet to supply power to the cabinet, thereby meeting the transient power supply requirement of the cabinet. Therefore, reliability of supplying power to the cabinet when a transient power-supply event occurs in the cabinet is improved.

## Description

This application claims priorities to Chinese Patent Application No. 202311247314.7, filed with the China National Intellectual Property Administration on September 25, 2023 and entitled "POWER SUPPLY METHOD, POWER SUPPLY SYSTEM, AND CABINET", and to Chinese Patent Application No. 202311331871.7, filed with the China National Intellectual Property Administration on October 13, 2023 and entitled "POWER SUPPLY METHOD, POWER SUPPLY SYSTEM, AND CABINET", both of which are incorporated herein by reference in their entireties.

### TECHNICAL FIELD

This application relates to the computer field, and in particular, to a power supply method, a power supply system, and a cabinet.

### BACKGROUND

With the development of services such as artificial intelligence and big data, computational power and power supply requirements of data centers increase accordingly. A regional intelligent computing center is used as an example. To meet the P-scale/E-scale computational power requirements, thousands of processors (such as xPU chips) need to be interconnected, via high-speed networks, into a uniformly schedulable computational power cluster. Due to the large quantity of processors, tens of megawatts (megawatt, MW) of mains electricity is typically required.

Currently, if a cabinet experiences a transient power-supply event, there is an instantaneous need to provide more electric energy for the cabinet. For example, if a device in the cabinet operates under overclocking or a mains failure occurs, more electric energy needs to be provided for the device in the cabinet, to ensure normal operation of the device. However, a mains electricity capacity is typically configured based on a rated power of the cabinet. In this case, a transient power-supply requirement when the device in the cabinet operates under overclocking cannot be met. In addition, a power supply supplying power to the cabinet cannot meet a transient power-supply requirement of the cabinet in the event of a mains failure. Therefore, providing a solution to a problem of low reliability of supplying power to the cabinet during transient power-supply events in the cabinet becomes an urgent technical issue.

### SUMMARY

This application provides a power supply method, a power supply system, and a cabinet, to improve reliability of supplying power to the cabinet when a transient power-supply event occurs in the cabinet.

According to a first aspect, a power supply method is provided. The method is applied to a power supply system, and the power supply system includes a power supply unit (Power supply unit, PSU) and a burst power supply module. The PSU is configured to provide a power supply capability meeting a steady-state power supply requirement of a cabinet, the burst power supply module is configured to provide a power supply capability meeting a transient power supply requirement of the cabinet, and both the PSU and the burst power supply module are connected to a bus of the cabinet. The method includes: detecting a status of the cabinet in which the power supply system is located; and when the status indicates that a transient power-supply event occurs in the cabinet, triggering, based on the transient power supply requirement, coordination between the PSU and the burst power supply module to supply power to the cabinet.

In this way, the burst power supply module is additionally disposed in the power supply system in the cabinet. When the PSU supplies power to the cabinet at a constant power, the burst power supply module connected to the bus may obtain electric energy and store the electric energy. When a transient power-supply event occurs in the cabinet, the burst power supply module quickly supplements electric energy needed by the cabinet to supply power to the cabinet, thereby meeting the transient power supply requirement of the cabinet. Therefore, reliability of supplying power to the cabinet when a transient power-supply event occurs in the cabinet is improved.

In comparison with a case in which a mains capacity is configured based on a peak power (for example, an overclocked peak power) of the cabinet, and a device in the cabinet operates in a non-continuous overclocking state, resulting in generally low electric energy utilization, in the solution provided in this application, the mains capacity may be configured based on a rated power of the cabinet, to reduce a quota of the mains capacity. When a transient power-supply event occurs in the cabinet, the PSU and the burst power supply module cooperate to supply power to the cabinet, to improve the electric energy utilization. In a case of a same mains capacity, in the solution provided in this application, more computational power units (for example, XPUs used for data processing) may be deployed in the cabinet, to improve computational power of the cabinet and implement service value addition.

In a possible implementation, the burst power supply module includes an energy storage unit, and the energy storage unit includes a plurality of passive elements, where the energy storage unit stores electric energy by using the plurality of passive elements. For example, the passive element includes an aluminum capacitor, a high-voltage capacitor, a supercapacitor, and the like.

In comparison with a case in which a lithium battery in the cabinet is used as an energy storage medium to implement peak shaving and valley filling, and the lithium battery has a security risk, because the passive element can operate, without adding a power supply, when there is a signal, for example, when a voltage is added to two ends of a capacitor, the capacitor stores a charge, thereby effectively eliminating the security risk of the energy storage medium in the cabinet. In addition, in comparison with the lithium battery, the capacitor has a larger storage capacity, so that the burst power supply module including the passive elements can provide a hundred-millisecond/second-level power supply capability when the mains failure occurs, thereby improving reliability of supplying power to the cabinet when a mains failure occurs.

In another possible implementation, the plurality of passive elements included in the energy storage unit are connected in parallel, to implement fault isolation between the passive elements connected in parallel, and ensure reliability of the energy storage unit.

In another possible implementation, the method further includes: The PSU supplies power to the cabinet at a constant power, and the plurality of passive elements in the burst power supply module store electric energy.

Therefore, when the PSU can supply power to the cabinet in a steady state, the plurality of passive elements in the burst power supply module are used to store electric energy, so that when a transient power-supply event occurs in the cabinet, the burst power supply module quickly supplements the electric energy needed by the cabinet to supply power to the cabinet, thereby meeting the transient power supply requirement of the cabinet.

In another possible implementation, the method further includes: When a transient power-supply event occurs in the cabinet, the burst power supply module supplies power to the cabinet through discharging of the plurality of passive elements in the burst power supply module.

Therefore, when a transient power-supply event occurs in the cabinet, the burst power supply module quickly supplements electric energy needed by the cabinet to supply power to the cabinet, thereby meeting the transient power supply requirement of the cabinet.

In another possible implementation, the triggering, based on the transient power supply requirement, the coordination between the PSU and the burst power supply module to supply power to the cabinet includes: The burst power supply module detects that a bus voltage is less than or equal to a bus voltage threshold, and the burst power supply module adjusts an operating frequency of the burst power supply module to cooperate with the PSU to supply power to the cabinet.

In this way, the burst power supply module smoothly discharges, cooperates with the PSU to supply power to the cabinet, and provides a stable voltage for the cabinet.

In another possible implementation, the triggering, based on the transient power supply requirement, the coordination between the PSU and the burst power supply module to supply power to the cabinet includes: coordinating, based on a quantity of devices in the cabinet that require transient power supply, the PSU and the burst power supply module to supply power to the cabinet.

In this way, the PSU and the burst power supply module are properly coordinated, based on the transient power supply requirement, to supply power to the cabinet, thereby saving electric energy.

In another possible implementation, the triggering, based on the transient power supply requirement, the coordination between the PSU and the burst power supply module to supply power to the cabinet includes: The PSU detects that the transient power-supply event is that a device in the cabinet operates under overclocking, and the PSU and the burst power supply module jointly supply power to the cabinet.

Because the electric energy needed by the cabinet increases instantaneously when the device in the cabinet operates under overclocking, the burst power supply module and the PSU jointly supply power to the cabinet to meet the transient power supply requirement of the cabinet. In this way, power can be supplied to a high peak-to-average ratio load in the cabinet, a hundred-millisecond-level power supply requirement of the burst power supply module is met, and peak shaving is implemented.

In another possible implementation, the triggering, based on the transient power supply requirement, the coordination between the PSU and the burst power supply module to supply power to the cabinet includes: The PSU detects that the transient power-supply event is a mains failure, and the burst power supply module supplies power to the cabinet.

When the mains failure occurs, the PSU loses a source for electric energy, cannot continue to supply power to the cabinet for a long period, and cannot meet the transient power supply requirement of the cabinet. In this case, the PSU may be in a no-load state. For example, an output voltage of the PSU is lowered, so that the PSU does not supply power to the cabinet and the burst power supply module supplies power to the cabinet, thereby improving a capability of the cabinet against the mains failure. The burst power supply module uses the passive element to store electric energy. Therefore, the cabinet can withstand a hundred-millisecond/second-level mains failure, and a capability of the cabinet against a long-time mains failure is improved.

For example, the PSU lowers the output voltage of the PSU, and the PSU and the burst power supply module cooperate to supply power to the cabinet. When the device in the cabinet operates under overclocking, the output voltage of the PSU may be equal to an output voltage of the burst power supply module, and the PSU and the burst power supply module jointly supply power to the cabinet. When the mains failure occurs, the output voltage of the PSU may be less than the output voltage of the burst power supply module, and the burst power supply module supplies power to the cabinet.

In another possible implementation, the power supply system includes a plurality of burst power supply modules, and the plurality of burst power supply modules are disposed in at least one unit of space in the cabinet.

A size of the burst power supply module is designed based on the unit of space in the cabinet, so that the burst power supply module is flexibly disposed in the at least one unit of space in the cabinet, thereby improving adaptability of the burst power supply module.

In another possible implementation, that the coordination between the PSU and the burst power supply module to supply power to the cabinet includes: the plurality of burst power supply modules supply power to a component in the cabinet based on parallel current sharing.

In this way, the plurality of burst power supply modules are connected in parallel, to implement fault isolation between the burst power supply modules connected in parallel, and ensure the reliability of the energy storage unit. In addition, when a transient power-supply event occurs in the cabinet, the plurality of burst power supply modules connected in parallel quickly supplement the electric energy needed by the cabinet to supply power to the cabinet, thereby meeting the transient power supply requirement of the cabinet.

In another possible implementation, the method further includes: The PSU obtains an overclocking operating signal of the device in the cabinet, and the coordination between the PSU and the burst power supply module is triggered to supply power to the cabinet; or the burst power supply module obtains a mains failure signal, and the burst power supply module is triggered to supply power to the cabinet.

In this way, the PSU or the burst power supply module can learn that a transient power-supply event occurs in the cabinet as soon as possible, and quickly supplement the electric energy needed by the cabinet to supply power to the cabinet, thereby meeting the transient power supply requirement of the cabinet.

In another possible implementation, the method further includes: The PSU detects that the transient power-supply event ends, the PSU supplies power to the cabinet at a constant power, and the plurality of passive elements in the burst power supply module store electric energy.

According to a second aspect, a power supply system is provided. The power supply system includes a PSU and a burst power supply module, and the power supply system is configured to perform the operation steps of the method according to the first aspect or any one of the possible implementations of the first aspect.

In a possible implementation, the burst power supply module includes an energy storage unit, and the energy storage unit includes a plurality of passive elements, where the energy storage unit stores electric energy by using the plurality of passive elements.

In another possible implementation, the power supply system includes a plurality of burst power supply modules, and the plurality of burst power supply modules are disposed in at least one unit of space in a cabinet.

According to a third aspect, a cabinet is provided. The cabinet includes the power supply system according to the second aspect or any one of the possible implementations of the second aspect. The power supply system is configured to perform the operation steps of the method according to the first aspect or any one of the possible implementations of the first aspect.

According to a fourth aspect, a power supply apparatus is provided. The power supply apparatus includes modules configured to perform the power supply method in the first aspect or any one of the possible implementations of the first aspect.

According to a fifth aspect, a burst power supply module is provided. The burst power supply module includes a logic circuit. The logic circuit is configured to perform the operation steps of the method in the first aspect or any one of the possible implementations of the first aspect.

According to a sixth aspect, a computer-readable storage medium is provided. The computer-readable storage medium stores instructions. When the instructions are run on a computer, the computer is caused to perform the method according to the foregoing aspects.

For technical effects brought by any design manner in the second aspect to the sixth aspect, refer to technical effects brought by the first aspect or different design manners in the first aspect. Details are not described herein again.

In this application, based on the implementations provided in the foregoing aspects, the implementations may be further combined to provide more implementations.

### BRIEF DESCRIPTION OF DRAWINGS

FIG. 1 is a diagram of a cabinet system according to this application;
FIG. 2 is a diagram of an architecture of a power supply system according to this application;
FIG. 3 is a diagram of a structure of a cabinet according to this application;
FIG. 4 is a diagram of structures of a port of a PSU and a port of a burst power supply module according to this application;
FIG. 5 is a diagram of a structure of a burst power supply module according to this application;
FIG. 6 is a diagram of a circuit structure of a burst power supply module according to this application;
FIG. 7 is a diagram of a circuit structure of an energy storage unit according to this application;
FIG. 8 is a schematic flowchart of a power supply method according to this application;
FIG. 9(a) and FIG. 9(b) are diagrams of a power supply effect according to this application;
FIG. 10 is a diagram in which a PSU and a burst power supply module cooperate to supply power to a cabinet in an overclocking scenario according to this application;
FIG. 11 is a diagram of an example of a bus voltage & joint load control policy according to an embodiment of this application;
FIG. 12 is a diagram in which a PSU and a burst power supply module cooperate to supply power to a cabinet in a mains failure scenario according to this application;
FIG. 13 is a diagram of an example of a bus voltage control policy according to an embodiment of this application;
FIG. 14 is a diagram of signal linkage among a PSU, a burst power supply module, and a component according to this application;
FIG. 15 is a diagram of a structure of a power supply system according to this application; and
FIG. 16 is a diagram of a structure of a power supply apparatus according to this application.

### DESCRIPTION OF EMBODIMENTS

For ease of understanding, main terms in this application are first explained.

**Power supply unit (Power supply unit, PSU):** PSU is a power supplier mounted on a printed circuit board. The power supply unit is configured to provide electric energy for all components in a computer system. The components include but are not limited to an application-specific integrated circuit (application-specific integrated circuit, ASIC), a digital signal processor (digital signal processing, DSP), a microprocessor, a storage, a field-programmable gate array (field-programmable gate array, FPGA), and another digital or analog load.

**Overclocking (overclocking):** Overclocking is a technology for increasing a clock speed (that is, a clock pulse frequency) of a component, thereby increasing an operating frequency of the component, for example, increasing operating frequencies (for example, a clock speed, a base clock, and a multiplier) of a processor in a computer system. The processor includes a high-power compute unit with a computing capability, for example, a central processing unit (central processing unit, CPU), a graphics processing unit (graphics processing unit, GPU), a data processing unit (data processing unit, DPU), a neural processing unit (neural processing unit, NPU), or an embedded neural-network processing unit (neural-network processing unit, NPU). When the component operates under overclocking, the component consumes more power, and the power supply unit needs to provide a larger power supply capability.

**Power:** Power indicates an amount of work done by an object per unit time, in other words, a physical quantity indicating how quickly the object does work. Power is measured in watts (watt, W), W for short. Power may be represented by P, where P=W/t. W represents work, measured in Joules. t represents unit time, measured in seconds (second, S).

**Rated power of a power supply unit:** It indicates a power of the power supply unit when the power supply unit operates stably and continuously, and indicates a power supply capability of the power supply unit when the power supply unit operates stably and continuously. For example, the rated power of the power supply unit is a product of multiplying a rated voltage of the power supply unit by a rated current, that is, P=W/t=UI. U represents the rated voltage and I represents the rated current.

**Output power of a power supply unit:** It indicates a power provided by the power supply unit when the power supply unit supplies power to a load. The output power of the power supply unit is a product of multiplying an output voltage of the power supply unit by an output current. If the output power is greater than the rated power, the power supply unit enables an over power protection (over power protection, OPP) function to turn off a power supply. If the over power protection is not enabled, the power supply unit is damaged due to overheat. The over power protection is a mechanism in which the power supply unit automatically powers off when the output power of the power supply unit continuously increases and reaches a threshold, to prevent the power supply unit from being damaged due to overcurrent.

**Burst power:** Burst power indicates a transient power provided based on a transient power supply requirement (for example, overclocking) of a component.

**Voltage (voltage):** Voltage, also referred to as an electric potential difference or a potential difference, is a physical quantity for measuring an energy difference caused by different electric potentials of a unit charge in an electrostatic field. An input voltage of a power supply unit is a voltage supplied or applied by the outside to the power supply unit. The output voltage of the power supply unit is a voltage supplied or applied by the power supply unit to the outside.

**Mains electricity (Mains electricity):** It refers to a power frequency alternating current (Alternating Current, AC), and is commonly represented by a voltage, a current, and a frequency of an alternating current. A common alternating current power frequency is 50 hertz (Hertz, Hz) or 60 Hz. A civil alternating current voltage ranges from 100 V to 380 V. For example, mains electricity with a 380 V alternating current voltage and a 50 Hz alternating current power frequency serves as a power supply of an equipment room.

**Thermal design power (Thermal Design Power, TDP):** It is an indicator for heat release of a component, and may refer to heat generated by the component per unit time when the component operates. The thermal design power may also be referred to as heat dissipation design power consumption.

**Electronic design power (Electronic Design Power, EDP):** It is a power consumption indicator for a component during transient power supply.

**Transient:** Transient refers to transient changes of a current and a voltage in a circuit in a short period.

To resolve a problem of low reliability of supplying power to a cabinet in the event of a transient power-supply event, this application provides a power supply method. The power supply method may also be referred to as a power supply enhancement (Power Turbo) method. A burst power supply module is additionally disposed in a power supply system including a PSU. The PSU is configured to provide a power supply capability meeting a steady-state power supply requirement of a cabinet. The burst power supply module is configured to provide a power supply capability meeting a transient power supply requirement of the cabinet. Both the PSU and the burst power supply module are connected to a bus of the cabinet. When it is detected that a status of the cabinet in which the power supply system is located indicates that a transient power-supply event occurs in the cabinet, coordination between the PSU and the burst power supply module is triggered, based on the transient power supply requirement, to supply power to the cabinet. The burst power supply module may also be referred to as an instantaneous power supply module or a transient power supply module.

Because the burst power supply module is additionally disposed in the power supply system in the cabinet, when the PSU supplies power to the cabinet at a constant power, the burst power supply module connected to the bus may obtain electric energy and store the electric energy. When a transient power-supply event occurs in the cabinet, the burst power supply module quickly supplements electric energy needed by the cabinet to supply power to the cabinet, thereby meeting the transient power supply requirement of the cabinet. Therefore, reliability of supplying power to the cabinet when a transient power-supply event occurs in the cabinet is improved.

In comparison configuring a mains capacity based on a peak power (for example, an overclocked peak power) of the cabinet, in cases where cabinet devices operate in a non-continuous overclocking state, resulting in generally low electric energy utilization, the solution provided in this application allows configuring the mains capacity based on a rated power of the cabinet, to reduce a quota of the mains capacity. When a transient power-supply event occurs in the cabinet, the PSU and the burst power supply module cooperate to supply power to the cabinet, to improve the electric energy utilization. In a case of a same mains capacity, in the solution provided in this application, more computational power units (for example, XPUs used for data processing) may be deployed in the cabinet, to improve computational power of the cabinet and implement service value addition.

The method provided in this application may be applied to scenarios such as large-scale supercomputing, regional supercomputing, and public cloud scenarios, for example, a high-performance computing (High performance computing, HPC) scenario. The burst power supply module may be disposed in the cabinet or outside the cabinet in the foregoing scenario. A form of the cabinet in which the burst power supply module is additionally disposed is not limited in this application. For example, the burst power supply module is disposed inside a cabinet server, a blade server, or a rack server. For another example, the burst power supply module is disposed outside a supercomputing cabinet server.

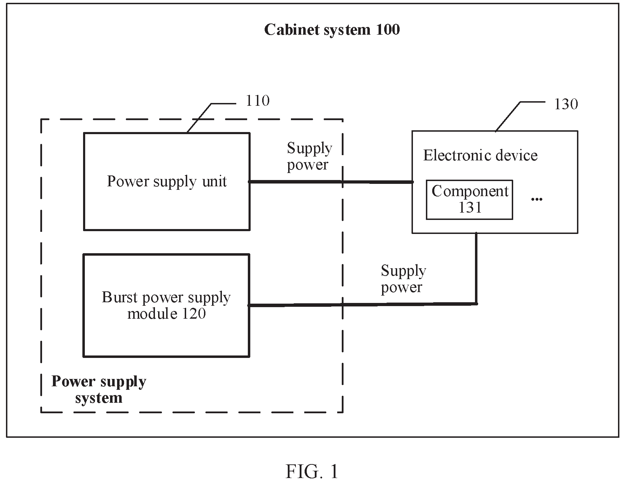

The following describes in detail the power supply method provided in this application with reference to the accompanying drawings. FIG. 1 is a diagram of a cabinet system according to this application. As shown in FIG. 1, the cabinet system 100 includes a power supply unit 110, a burst power supply module 120, and an electronic device 130. The electronic device 130 may include a plurality of components 131.

The components 131 include an electronic component used for data processing or communication in a computer system, for example, a processor, a storage and a memory (which may also be referred to as a main memory (main memory) unit), a network adapter (for example, a network interface card (network interface card, NIC) or an intelligent network interface card (intelligent network interface card, iNIC)). The processor may be an XPU used for data processing, for example, a central processing unit (central processing unit, CPU), a graphics processing unit (graphics processing unit, GPU), a data processing unit (data processing unit, DPU), a neural processing unit (neural processing unit, NPU), or an embedded neural-network processing unit (neural-network processing unit, NPU).

It should be noted that the cabinet system 100 in FIG. 1 may include one or a plurality of components, and types of the plurality of components may be the same or different. For example, the cabinet system 100 may include a plurality of types of XPUs such as a CPU, a GPU, and an NPU. The processor may be a multi-core (multi-CPU) processor.

The power supply unit 110 and the burst power supply module 120 may serve as a power supply system to supply power to the component 131 in the electronic device 130.

The power supply unit 110 is configured to supply power to the electronic device 130 in the cabinet system 100 at a constant power. For example, the power supply unit 110 is configured to supply power to the electronic device 130 in the cabinet system 100 for a long period at a rated power. For example, the rated power may be 3 kilowatts (kilowatt, kW).

The electronic device 130 may include a voltage divider module. The voltage divider module is configured to convert an input voltage of the electronic device 130 into a voltage needed by the component 131 in the electronic device 130.

When the power supply unit 110 supplies power to the electronic device 130 in the cabinet system 100 at a constant power, the burst power supply module 120 stores electric energy.

The burst power supply module 120 is configured to: when a transient power-supply event occurs in the cabinet system 100, cooperate with the power supply unit 110 to supply power to the cabinet system 100.

In some embodiments, the power supply unit 110 and the burst power supply module 120 are separately connected to a bus, so that the burst power supply module 120 cooperates with the power supply unit 110 to supply power to the cabinet system 100.

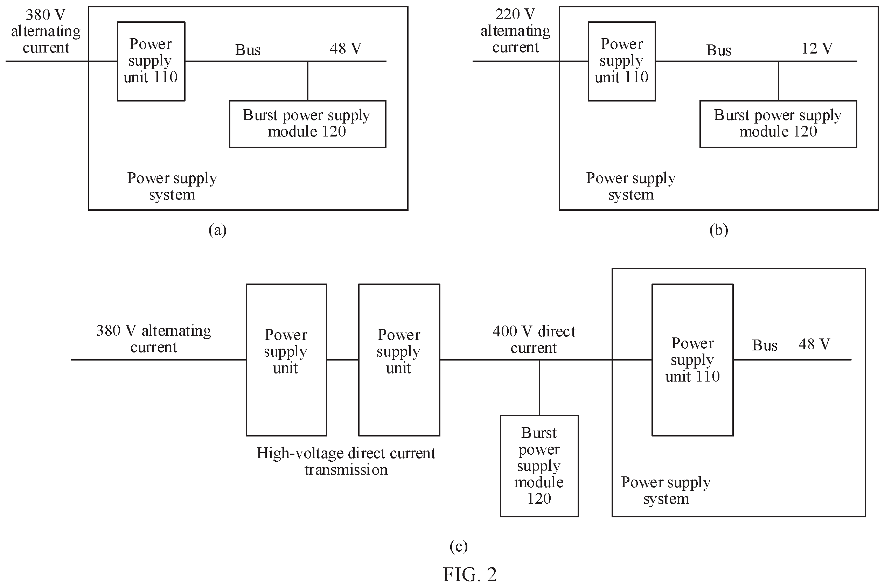

A bus voltage may vary with a form of a server. For example, as shown in (a) in FIG. 2, the bus voltage may be 48 V, and an input voltage of the cabinet system 100 may be a 380 V alternating current. As shown in (b) in FIG. 2, the bus voltage may be 12 V, and the input voltage of the cabinet system 100 may be a 220 V alternating current.

In some other embodiments, the burst power supply module 120 is disposed outside the cabinet system 100, the power supply unit 110 is disposed inside the cabinet system 100, and the power supply unit 110 and the burst power supply module 120 are separately connected to the bus. For example, as shown in (c) in FIG. 2, the bus voltage may be 48 V, and an input voltage of an equipment room may be a 380 V alternating current. The 380 V alternating current is converted into a 400 V direct current through high-voltage direct current transmission (HVDC), to provide the 400 V direct current for the cabinet system 100.

In FIG. 1, that the cabinet system 100 includes one power supply unit 110 and one burst power supply module 120 is merely an example. One power supply unit 110 and one burst power supply module 120 each indicates a type of device. In a specific embodiment, a quantity of devices of each type may be determined based on a requirement.

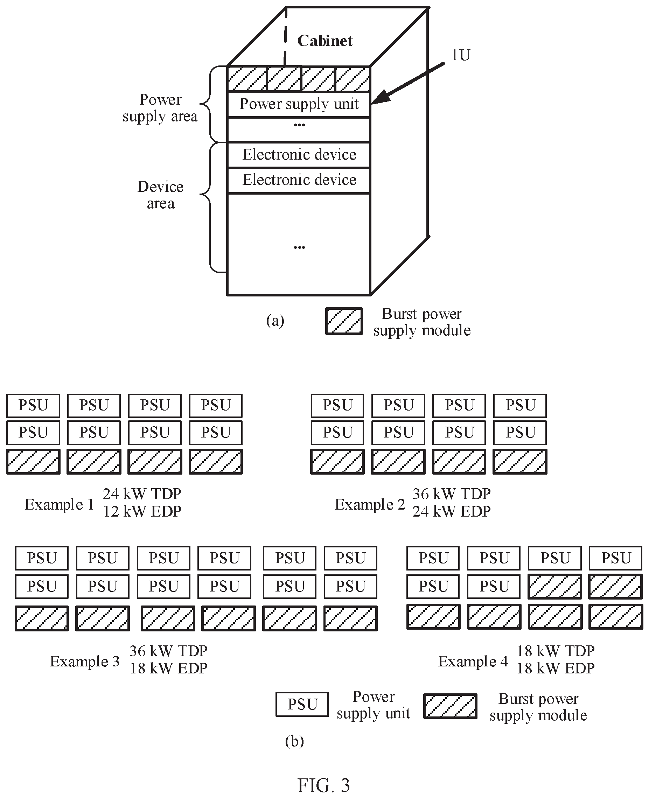

For example, as shown in (a) in FIG. 3, in a cabinet, a burst power supply module is deployed in a 1U or several U of space. One or more burst power supply modules may be deployed in 1U. At least one burst power supply module may be disposed in the cabinet. It should be noted that the burst power supply module serves an energy storage component, and a larger quantity of burst power supply modules disposed in a single cabinet indicates a stronger capability of providing transient power supply for a component in the cabinet. For example, four burst power supply modules may be deployed in 1U, where the four burst power supply modules can support transient power supply requirements of 10 servers in a single cabinet.

In some embodiments, a ratio of the burst power supply module to a power supply unit may be configured based on a transient power supply requirement of the cabinet. For example, a quantity of power supply units and the quantity of burst power supply modules are designed based on thermal design power and electronic design power of the component in the cabinet. In this way, the burst power supply module and the power supply unit are configured as required, to save power supply resources, reduce power supply and distribution costs for an equipment room, and improve scalability of a power supply system in the cabinet.

For example, as shown in (b) in FIG. 3, in Example 1 to Example 3, the thermal design power is greater than the electronic design power, indicating that the component in the cabinet dissipates more heat when operating at a rated frequency, and dissipates less heat when operating under overclocking. In this case, a large quantity of power supply units may be configured, and a small quantity of burst power supply modules may be configured. In Example 4, if the thermal design power is equal to the electronic design power, a same quantity of power supply units and burst power supply modules may be configured.

In some other embodiments, a size of the burst power supply module is the same as a size of the PSU, and a port format of the burst power supply module is designed based on a port format of the PSU, to improve adaptability of the burst power supply module and implement flexible mixed configuration of the burst power supply module in the cabinet.

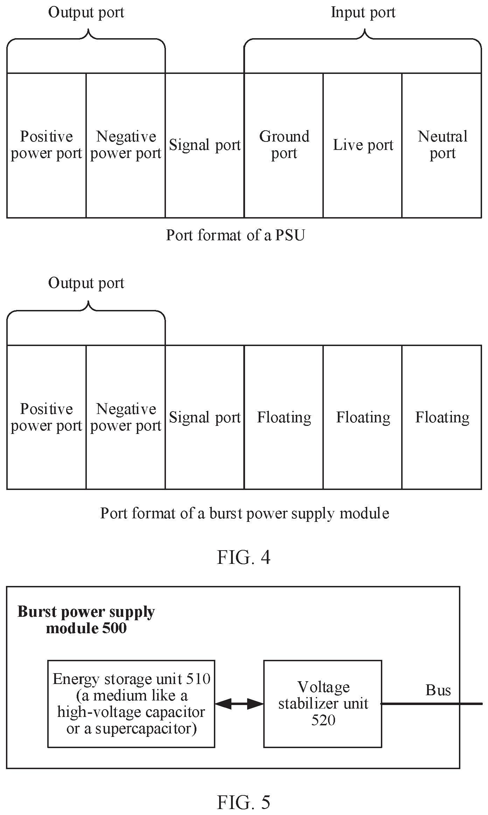

For example, as shown in FIG. 4, a port format of a PSU includes a positive power port, a negative power port, a signal port, a ground port, a live port, and a neutral port. An output port of the PSU includes a positive power port and a negative power port. An input port of the PSU includes a ground port, a live port, and a neutral port. A port format of a burst power supply module includes a positive power port, a negative power port, and a signal port. An output port of the burst power supply module includes a positive power port and a negative power port.

FIG. 5 is a diagram of a structure of a burst power supply module according to this application. As shown in FIG. 5, the burst power supply module 500 includes an energy storage unit 510 and a voltage stabilizer unit 520. The energy storage unit 510 includes passive elements such as an aluminum capacitor, a high-voltage capacitor, and a supercapacitor. The energy storage unit 510 is configured to store electric energy. The voltage stabilizer unit 520 is configured to control a charging voltage and a discharging voltage of the burst power supply module 500, to ensure a service life and safety of the burst power supply module 500. For example, functions of the voltage stabilizer unit 520 include a voltage stabilization function, an overload protection function, and a short-circuit protection function.

When the burst power supply module 500 is charged, the voltage stabilizer unit 520 may increase an input voltage, so that the energy storage unit 510 stores electric energy. When the burst power supply module 500 discharges, the voltage stabilizer unit 520 may lower an output voltage, and supply power to a component via a bus 530.

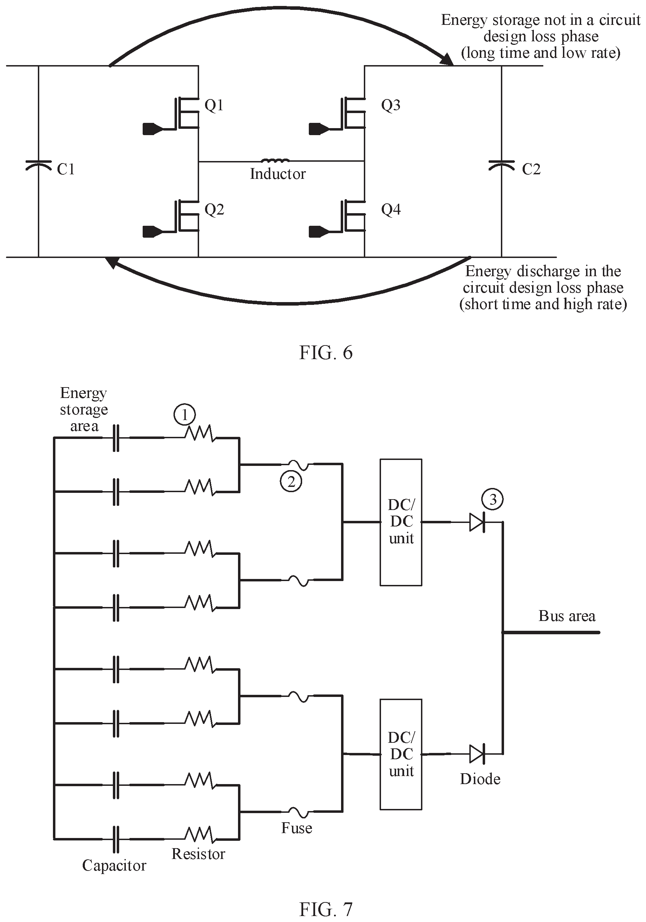

Charging and discharging management of the energy storage unit may be implemented by using an isolated or non-isolated bidirectional direct current to direct current converter (DC-to-DC converter, DC-DC), or a power topology in which a charging loop and a discharging loop are separated may be used. For example, a step-up circuit like a boost circuit is used to charge the energy storage unit, and a step-down circuit like a buck circuit is used when the energy storage unit discharges. For the charging and discharging management of the energy storage unit, a voltage of the energy storage unit may be designed to any bus voltage based on an actual requirement and component selection. FIG. 6 is a diagram of a circuit structure of a burst power supply module according to this application. Q1, Q2, Q3, and Q4 in a circuit may be switches (for example, transistors), and charging and discharging of an energy storage unit are implemented through turn-on and turn-off of the switches. A capacitor C1 is connected to a bus, and a capacitor C2 serves as an energy storage medium. For example, when the energy storage unit 510 is charged, Q1 and Q4 are first turned on for charging of an inductor, and Q1 and Q4 are turned off and Q2 and Q3 are turned on for charging of C2. When the energy storage unit 510 discharges, Q2 and Q3 are first turned on for discharging of C2, and Q2 and Q3 are turned off and Q1 and Q4 are turned on for discharging of the inductor, and electric energy is transmitted to the bus via C1.

A voltage stabilizer unit 520 may further include a microcontroller unit (Microcontroller Unit, MCU), configured to adjust fast charging or discharging of the burst power supply module 500. For example, the MCU controls turn-on or turn-off of Q1, Q2, Q3, and Q4, to adjust fast charging or discharging of the energy storage unit 510.

In some other embodiments, the energy storage unit may include a plurality of passive elements. The plurality of passive elements are connected in parallel, to implement fault isolation between the passive elements connected in parallel, and ensure reliability of the energy storage unit. Safe application of the energy storage unit may be implemented through a physical protection measure, for example, adding a capacitor with potting compound. FIG. 7 is a diagram of a circuit structure of an energy storage unit according to this application. A plurality of capacitors are connected in multi-stage parallel, and a resistor, a fuse, and a diode are further disposed between the capacitor and a bus, to ensure safety and availability of the energy storage unit.

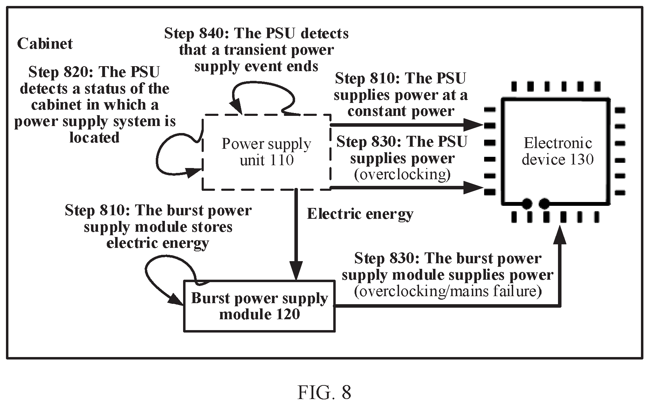

The following describes, with reference to the accompanying drawings, a procedure of a power supply method provided in this application, as shown in FIG. 8. An example in which the power supply unit 110 and the burst power supply module 120 shown in the cabinet system 100 supply power, as shown in FIG. 1, to the cabinet is used for description.

**Step 810: The PSU supplies power to a component in the cabinet at a constant power, and the burst power supply module stores electric energy.**

Because both the PSU and the burst power supply module are connected to a bus, and an output voltage of the PSU may be higher than an output voltage of the burst power supply module, the PSU supplies power to the cabinet at a constant power via the bus, the burst power supply module stores electric energy, and the burst power supply module does not supply power to the cabinet.

**Step 820: The PSU detects a status of the cabinet in which a power supply system is located.**

An MCU in the PSU may collect power supply parameters such as an input voltage, the output voltage, an input current, and an output current of the PSU. The MCU determines, based on the collected power supply parameters, whether a transient power-supply event occurs in the cabinet. For example, when the MCU determines that an output power of the PSU is greater than a power threshold, the component in the cabinet may operate under overclocking, and an overclocking event occurs in the cabinet. For another example, when the MCU determines that the output current of the PSU is greater than a current threshold, the component in the cabinet may operate under overclocking, and an overclocking event occurs in the cabinet. The overclocking event may mean that the component operates at a higher operating frequency (for example, a power exceeding a rated power) to improve processing performance. Subsequently, to meet an overclocking function of the component, more electric energy needs to be provided for the component, and a power supply requirement of the cabinet increases instantaneously.

For another example, when the MCU determines that the input voltage of the PSU is less than a voltage threshold, a mains failure may occur, and a mains failure event occurs in the cabinet. The mains failure event may mean that mains electricity is suddenly interrupted, a bus voltage may decrease, and the component may not operate normally. In this case, electric energy for the component to operate normally when the mains failure occurs needs to be provided for the component.

**Step 830: When the PSU detects that a transient power-supply event occurs in the cabinet, trigger, based on a transient power supply requirement, coordination between the PSU and the burst power supply module to supply power to the cabinet.**

After the transient power-supply event occurs in the cabinet, the PSU may lower the output voltage of the PSU based on the transient power supply requirement, to cause the output voltage of the PSU to be less than or equal to the output voltage of the burst power supply module. In this case, the burst power supply module cooperates with the PSU to supply power to the cabinet.

After an overclocking event occurs in the cabinet, the PSU may lower the output voltage of the PSU based on the transient power supply requirement. For example, the PSU adjusts a first output voltage to a second output voltage, where the second output voltage of the PSU is equal to the output voltage of the burst power supply module, that is, adjusts the output voltage of the PSU to a voltage that is the same as the output voltage of the burst power supply module. In this case, the PSU and the burst power supply module jointly supply power to the cabinet, to meet electric energy needed by the component when the component operates under overclocking.

After a mains failure event occurs in the cabinet, the PSU may lower the output voltage of the PSU based on the transient power supply requirement. For example, the PSU adjusts a first output voltage to a second output voltage, where the second output voltage of the PSU is less than the output voltage of the burst power supply module. In this case, because the output voltage of the PSU is less than the output voltage of the burst power supply module, the burst power supply module supplies power to the cabinet, to meet electric energy needed by the component when a mains failure occurs.

Because the PSU does not need to supply power to the cabinet, the MCU in the PSU may continue to monitor the cabinet, and detect whether the transient power-supply event occurred in the cabinet ends. Then, the burst power supply module supplies power to the cabinet, so that a power supply capability for a hundred-millisecond/second-level transient power supply requirement of the cabinet can be implemented, thereby improving power reliability of supplying power to the cabinet when a mains failure occurs. For example, the MCU in the PSU collects power supply parameters such as the input voltage, the output voltage, the input current, and the output current of the PSU, and determines, based on the power supply parameters, whether the transient power-supply event occurred in the cabinet ends. The PSU detects that the output current of the PSU may be 0, indicating that the PSU is in a no-load state and the PSU does not need to supply power to the cabinet.

It should be noted that the PSU may include a microcontroller unit (Microcontroller Unit, MCU). The MCU lowers the output voltage of the PSU based on the transient power-supply event, so that the burst power supply module cooperates with the PSU to supply power to components in the cabinet, to meet the transient power supply requirement.

In some other embodiments, the burst power supply module may include a plurality of passive elements such as a high-voltage capacitor and a supercapacitor, and the plurality of passive elements are connected in parallel. The PSU supplies power to components in the cabinet at a constant power via the bus, and the plurality of passive elements connected in parallel store electric energy. After a transient power-supply event occurs in the cabinet, the burst power supply module cooperates with, based on the electric energy stored by the plurality of passive elements connected in parallel in the burst power supply module, the PSU to supply power to components in the cabinet.

For example, a plurality of burst power supply modules connected in parallel cooperate with, based on parallel current sharing, the PSU to supply power to components in the cabinet.

For example, one burst power supply module can provide electric energy for a 250-ampere load, and a current of the component in the cabinet when the component operates under overclocking is 1000 amperes. In this case, four burst power supply modules may be configured in the cabinet. When the component in the cabinet operates under overclocking, the four burst power supply modules jointly supply power to the component.

For another example, one burst power supply module can discharge for 20 milliseconds. A plurality of burst power supply modules may be configured in the cabinet. For example, five burst power supply modules are configured in the cabinet, and discharging of the five burst power supply modules can meet a power supply requirement of 100 milliseconds, thereby meeting a long-time power supply requirement when a mains failure occurs.

In some embodiments, the PSU may determine, based on a quantity of components that operate under overclocking in the cabinet, a quantity of burst power supply modules that assist the PSU in supplying power to the cabinet.

In some other embodiments, a plurality of levels of power thresholds may be preset, and the PSU determines, based on the output power of the PSU and the plurality of levels of power thresholds, the burst power supply module that supplies power to the cabinet.

Optionally, because both the PSU and the burst power supply module are connected to the bus, after the PSU lowers the output voltage of the PSU, the burst power supply module detects that the bus voltage is less than a bus threshold, and the burst power supply module adjusts an operating frequency or a duty cycle, for example, increases the operating frequency or the duty cycle, so that the burst power supply module smoothly discharges, and cooperates with the PSU to supply power to the cabinet. Optionally, the burst power supply module may also include an MCU, and the MCU adjusts the operating frequency or the duty cycle.

**Step 840: The PSU detects that the transient power-supply event ends, the PSU supplies power to the component in the cabinet at a constant power, and the burst power supply module stores electric energy.**

The MCU in the PSU may collect power supply parameters such as the input voltage, the output voltage, the input current, and the output current of the PSU. The MCU determines, based on the collected power supply parameters, that the transient power-supply event occurred in the cabinet ends. For example, when the MCU determines that the output power of the PSU is less than the power threshold, the component in the cabinet may end operating under overclocking, and the MCU determines that the overclocking event occurred in the cabinet ends. For another example, when the MCU determines that the output current of the PSU is less than the current threshold, the component in the cabinet may end operating under overclocking, and the MCU determines that the transient power-supply event occurred in the cabinet ends.

For another example, when the MCU determines that the input voltage of the PSU is greater than the voltage threshold, the mains electricity may be restored, and the MCU determines that the mains failure event ends.

After the transient power-supply event occurred in the cabinet ends, the PSU increases the output voltage of the PSU, to cause the output voltage of the PSU to be greater than the output voltage of the burst power supply module. In this case, the PSU supplies power to the component in the cabinet at a constant power, the burst power supply module continues to be charged, and the burst power supply module stores electric energy.

According to the power supply method provided in this application, the burst power supply module is disposed in the cabinet. In this case, when the PSU supplies power to components in the cabinet at a constant power, the burst power supply module including passive elements stores electric energy. After a transient power-supply event occurs in the cabinet, the burst power supply module cooperates with the PSU to supply power to the components in the cabinet. A hundred-millisecond/second-level transient power supply requirement of a high peak-to-average ratio load of the component in the cabinet is met, and peak shaving for the transient power supply requirement of the cabinet is implemented. A mains capacity is configured based on a rated power of the cabinet, to reduce a quota of the mains capacity and improve mains utilization. In a case of a same mains capacity, more components can be deployed in the cabinet, to improve computational power of the cabinet and implement service value addition.

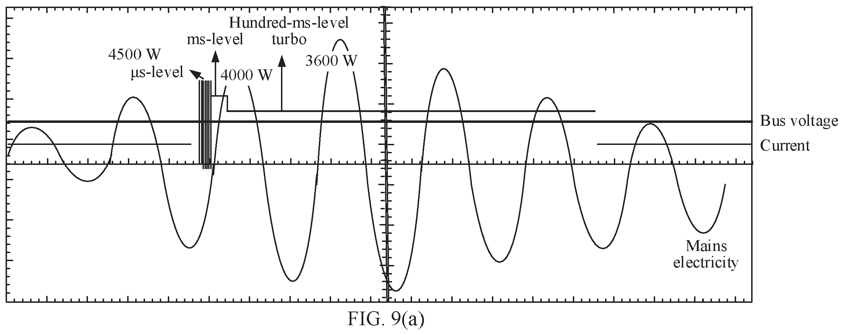

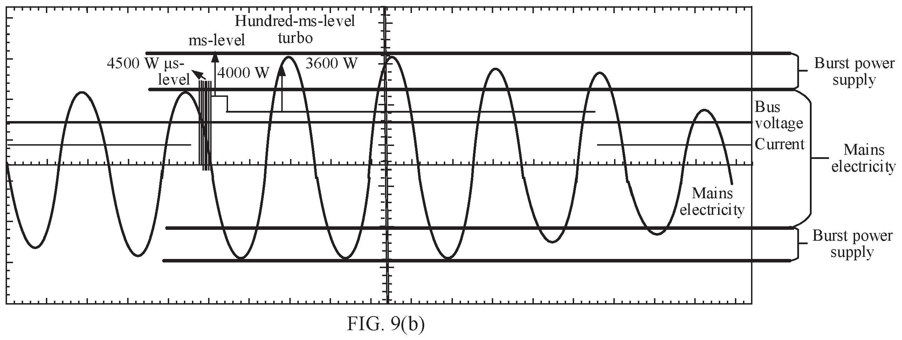

For example, with reference to the accompanying drawings, a comparison diagram of a peak shaving effect of a conventional solution and a peak shaving effect of the solution of this application is provided. As shown in FIG. 9(a), in the conventional solution, a mains capacity is configured based on a peak power of a cabinet. A bus voltage remains unchanged. When a component operates under overclocking, a current increases. To meet an electric energy requirement of the component, a mains current increases. As shown in FIG. 9(b), when the mains capacity is configured based on a rated power of the cabinet and the component operates under overclocking, the current increases. To meet the electric energy requirement of the component, a burst power supply module cooperates with a PSU to supply power to the component. In this case, mains electricity only needs to provide a TDP power supply requirement of the cabinet, and the burst power supply module provides a microsecond/millisecond/hundred-millisecond/second-level EDP power supply requirement of the cabinet. The burst power supply module supplies power to the component for energy supplement, thereby improving reliability of supplying power to the cabinet when a transient power-supply event occurs in the cabinet.

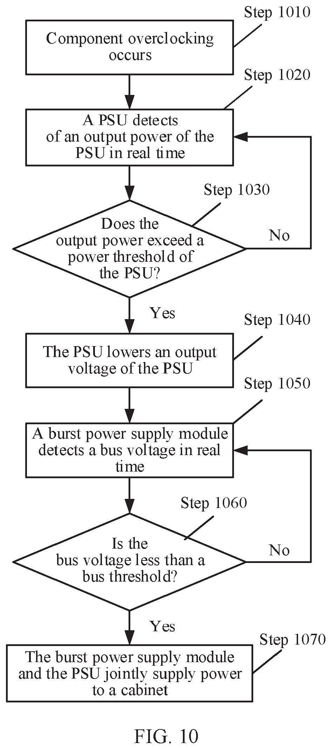

The following uses an overclocking scenario as an example to describe the power supply method in the transient power supply scenario shown in FIG. 8. As shown in FIG. 10, component overclocking occurs (step 1010), a PSU detects an output power of the PSU in real time (step 1020), and the PSU determines whether the output power of the PSU exceeds a power threshold of the PSU (step 1030). If the output power of the PSU does not exceed the power threshold of the PSU, detection of an output power of the PSU continues, that is, step 1020 continues to be performed. If the output power of the PSU exceeds the power threshold of the PSU, it indicates that a storage component in the cabinet operates under overclocking, and load suddenly increases. In this case, the PSU lowers an output voltage of the PSU (step 1040). Optionally, a burst power supply module detects a bus voltage in real time (step 1050), and the burst power supply module determines whether the bus voltage is less than a bus threshold (step 1060). If the bus voltage is not less than the bus threshold, detection of a bus voltage continues, that is, step 1050 continues to be performed. If the bus voltage is less than the bus threshold, the burst power supply module adjusts an operating frequency or a duty cycle, for example, increases the operating frequency or the duty cycle, so that the burst power supply module smoothly discharges, and cooperates with the PSU to supply power to components in the cabinet. That is, the burst power supply module and the PSU jointly supply power to the component (step 1070), to implement turbo peak shaving.

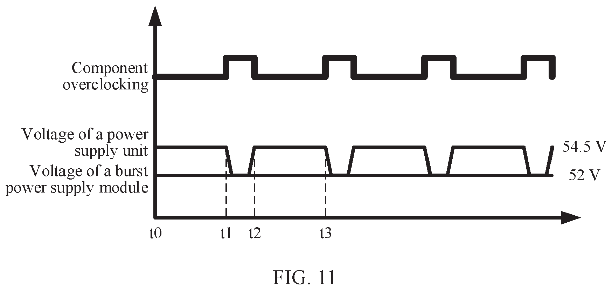

FIG. 11 is a diagram of an example of a bus voltage & joint load control policy according to this application. From t0 to t1, mains electricity is normal, and a PSU is loaded normally. At t1: 100 millisecond overclocking occurs, and the PSU lowers an output voltage at a constant power in a slow loop, for example, lowers the output voltage of the PSU from 54.5 V to 52 V. From t1 to t2, the PSU and a burst power supply module are jointly loaded in a fast loop, and the burst power supply module releases electric energy at a high rate, to quickly supplement energy for peak shaving. At t2, a 100-millisecond cycle ends, and the PSU increases the output voltage of the PSU. From t2 to t3, the PSU supplies power to a component and supplements energy to the burst power supply module at a low rate.

In this way, a bus voltage in a cabinet is controlled, and a slow loop constant power algorithm of the PSU and a fast loop voltage regulation algorithm of the burst power supply module are used in combination to implement joint load on a common bus, meet a power supply precision requirement of a load, and improve mains utilization.

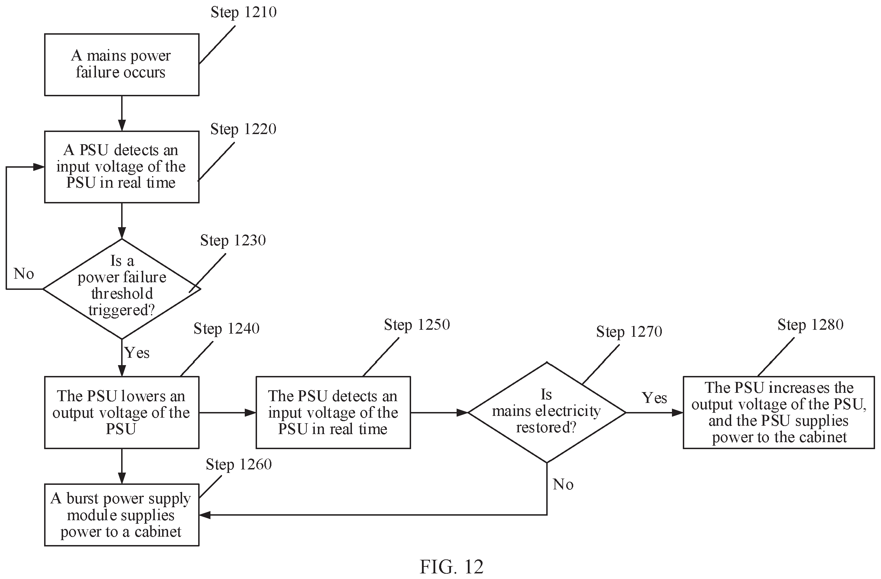

The following uses a mains failure scenario as an example to describe the power supply method in the transient power supply scenario shown in FIG. 8. As shown in FIG. 12, a mains failure occurs (step 1210), a PSU detects an input voltage of the PSU in real time (step 1220), and the PSU determines whether the input voltage of the PSU triggers a power failure threshold (step 1230). If the input voltage of the PSU does not trigger the power failure threshold, detection of an input voltage of the PSU continues, that is, step 1220 continues to be performed. If the input voltage of the PSU triggers the power failure threshold, it indicates that a mains failure may occur. In this case, the PSU lowers an output voltage of the PSU (step 1240). The PSU detects an input voltage of the PSU in real time (step 1250), and a burst power supply module supplies power to a cabinet (step 1260). The PSU determines whether mains electricity is restored (step 1270). If the mains electricity is not restored, step 1260 continues to be performed. If the mains electricity is restored, the PSU increases the output voltage of the PSU, and the PSU supplies power to the cabinet (step 1280).

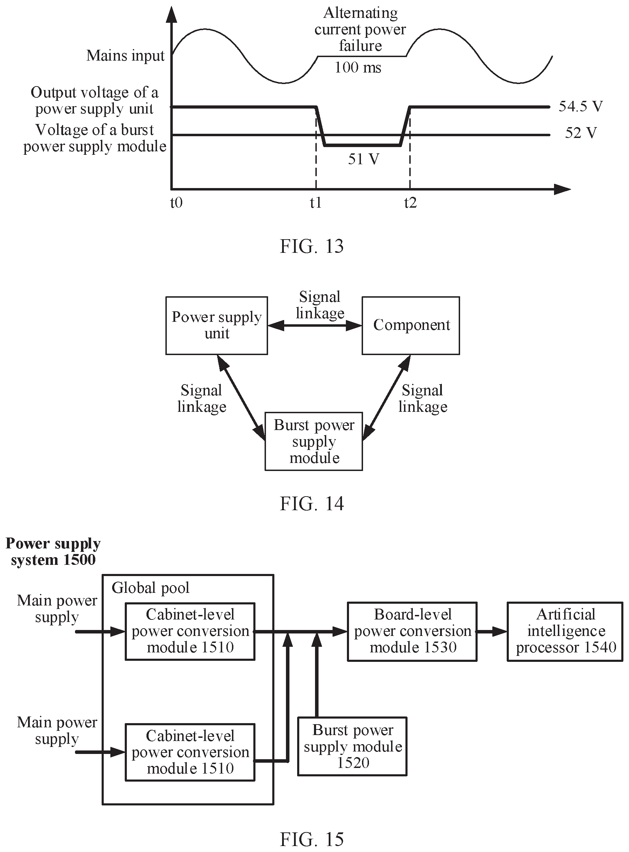

Based on the method shown in FIG. 12, FIG. 13 is a diagram of an example of a bus voltage control policy according to this application. From t0 to t1, mains electricity is normal, and a PSU is loaded. At t1, the mains electricity is intermittently interrupted, four milliseconds after the intermittent interruption, the PSU quickly lowers an output voltage, for example, lowers the output voltage of the PSU from 54.5 V to 51 V, and a burst power supply module is loaded. From t1 to t2, the burst power supply module is loaded (an output capability can be maintained for S seconds in this case), and the PSU is in a no-load operating state. At t2, the mains electricity is restored to normal from the intermittent interruption, and the PSU increases the output voltage again, is loaded again, and supplements energy to the burst power supply module.

In this way, a bus voltage in a cabinet is controlled, and the output voltage of the PSU is lowered in a mains electricity intermittent interruption phase, to implement offloading of the PSU. The burst power supply module supplies power, to improve a capability of withstanding input mains electricity intermittent interruption from a 10-millisecond level to a hundred-millisecond level.

In a class-C data center equipment room, because there is no mandatory backup power supply requirement, the equipment room does not need to be configured with a UPS. Mains electricity is directly supplied to the equipment room, to supply power to the cabinet, thereby greatly reducing power supply and distribution costs for the equipment room.

In some other embodiments, signal linkage may be established among the burst power supply module, the PSU, and a component. Prediction and predetermining are performed in advance based on services. The PSU and the burst power supply module may perform, based on linkage signals, the power supply method provided in this application, to further optimize implementation effect and improve mains utilization. For example, as shown in FIG. 14, when component overclocking occurs, an overclocking signal may be sent to a PSU and a burst power supply module, to cause the PSU to lower an output power of the PSU, and the burst power supply module adjusts an operating frequency or a duty cycle, for example, increases the operating frequency or the duty cycle. In this way, the burst power supply module smoothly discharges, and cooperates with the PSU to supply power to components in a cabinet. When a mains failure occurs, the PSU may send a power-off signal to the burst power supply module, to cause the burst power supply module to adjust the operating frequency or the duty cycle. In this way, the burst power supply module smoothly discharges, and cooperates with the PSU to supply power to components in the cabinet.

In a possible implementation, FIG. 15 is a diagram of a structure of a power supply system according to this application. As shown in FIG. 15, the power supply system 1500 includes a cabinet-level power conversion module 1510, a burst power supply module 1520, a board-level power conversion module 1530, and an artificial intelligence processor 1540. The cabinet-level power conversion module 1510, the burst power supply module 1520, the board-level power conversion module 1530, and the artificial intelligence processor 1540 are connected via a power bus 1550. The cabinet-level power conversion module 1510 is connected to a main power supply, and there may be one or more components. When a plurality of cabinet-level power conversion modules are disposed, the plurality of cabinet-level power conversion modules may form a global pool, and are configured to convert a voltage provided by the main power supply into a voltage needed by each server or device. The burst power supply module is configured to provide a burst power supply voltage for the system, so as to provide a needed voltage for the artificial intelligence processor to meet a requirement. A burst power supply module technology can maximize envelope performance and improve mains utilization. First, an optimal envelope performance can be provided. When a power supply within hundreds of milliseconds occurs, an AI computing capability can be significantly improved in a short period. An integral effect of heat dissipation can maximize the envelope performance. In another aspect, the burst power supply module can better provide the mains utilization. Power supply for the entire cabinet is secure and stable, excessive mains electricity is prevented, and the mains utilization is greatly improved.

It may be understood that, to implement functions in the foregoing embodiments, a computer system includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

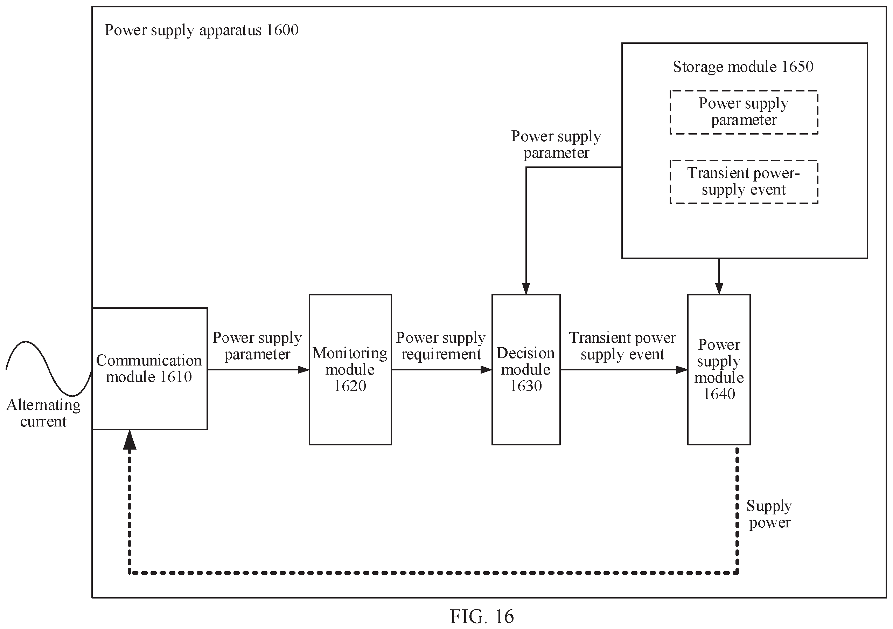

The foregoing describes in detail, with reference to FIG. 1 to FIG. 15, the power supply method provided in this application. The following describes, with reference to FIG. 16, a power supply apparatus provided in an embodiment.

FIG. 16 is a diagram of a structure of a possible power supply apparatus according to this application. The power supply apparatus may be configured to implement functions of the power supply unit in the foregoing method embodiments. Therefore, beneficial effects of the foregoing method embodiments can also be implemented. In this embodiment, the power supply apparatus may be the power supply unit 110 shown in FIG. 8.

As shown in FIG. 16, the power supply apparatus 1600 includes a monitoring module 1620, a decision module 1630, a power supply module 1640, and a storage module 1650. The power supply apparatus 1600 is configured to implement functions of the power supply unit in the method embodiment shown in FIG. 8.

The monitoring module 1620 is configured to process a power supply parameter of a cabinet.

The decision module 1630 is configured to detect a status of the cabinet in which a power supply system is located, and determine that a transient power-supply event occurs in the cabinet. For example, the decision module 1630 is configured to perform step 820 and step 830 in FIG. 8.

The power supply module 1640 is configured to supply power to a component in the cabinet at a constant power. For example, the power supply module 1640 is configured to perform step 810 in FIG. 8.

Optionally, the power supply apparatus 1600 further includes a communication module 1610, configured to obtain a power supply parameter.

Optionally, the power supply apparatus 1600 further includes the storage module 1650, configured, corresponding to the foregoing method embodiments, to store information like a transient power-supply event and a power supply parameter.

It should be understood that the power supply apparatus 1600 in this embodiment of this application may be implemented by using the PSU. The power supply apparatus 1600 in this embodiment of this application may correspondingly perform the method described in embodiments of this application, and the foregoing and other operations and/or functions of the units in the power supply apparatus 1600 are separately used to implement corresponding procedures of the method in FIG. 8. For brevity, details are not described herein again.

This application further provides a burst power supply module. The burst power supply module includes a logic circuit. The logic circuit is configured to perform the power supply method in the foregoing embodiments to supply power to a cabinet.

This application provides a data center. The data center includes a plurality of cabinets described in the foregoing embodiments. Power may be supplied to the cabinets according to the power supply method in the foregoing embodiments.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a compute device. Certainly, the processor and the storage medium may alternatively exist in a network device or a terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A power supply method, wherein the method is applied to a power supply system, the power supply system comprises a power supply unit PSU and a burst power supply module, the PSU is configured to provide a power supply capability meeting a steady-state power supply requirement of a cabinet, the burst power supply module is configured to provide a power supply capability meeting a transient power supply requirement of the cabinet, both the PSU and the burst power supply module are connected to a bus of the cabinet, and the method comprises:
detecting a status of the cabinet in which the power supply system is located; and
when the status indicates that a transient power-supply event occurs in the cabinet, triggering, based on the transient power supply requirement, coordination between the PSU and the burst power supply module to supply power to the cabinet.

2. The method according to claim 1, wherein the burst power supply module comprises an energy storage unit, and the energy storage unit comprises a plurality of passive elements, wherein the energy storage unit stores electric energy by using the plurality of passive elements.

3. The method according to claim 2, wherein the method further comprises:
supplying, by the PSU, power to the cabinet at a constant power, and storing, by the plurality of passive elements in the burst power supply module, electric energy.

4. The method according to claim 2 or 3, wherein the method further comprises:
when a transient power-supply event occurs in the cabinet, supplying, by the burst power supply module, power to the cabinet through discharging of the plurality of passive elements in the burst power supply module.

5. The method according to any one of claims 1 to **4,** wherein the triggering, based on the transient power supply requirement, the coordination between the PSU and the burst power supply module to supply power to the cabinet comprises:
detecting, by the burst power supply module, that the bus voltage is less than or equal to a bus voltage threshold, and adjusting, by the burst power supply module, an operating frequency of the burst power supply module to cooperate with the PSU to supply power to the cabinet.

6. The method according to any one of claims 1 to 5, wherein the triggering, based on the transient power supply requirement, the coordination between the PSU and the burst power supply module to supply power to the cabinet comprises:
coordinating, based on a quantity of devices in the cabinet that require transient power supply, the PSU and the burst power supply module to supply power to the cabinet.

7. The method according to any one of claims 1 to 6, wherein the triggering, based on the transient power supply requirement, the coordination between the PSU and the burst power supply module to supply power to the cabinet comprises:
detecting, by the PSU, that the transient power-supply event is that a device in the cabinet operates under overclocking, and jointly supplying, by the PSU and the burst power supply module, power to the cabinet.

8. The method according to any one of claims 1 to 6, wherein the triggering, based on the transient power supply requirement, the coordination between the PSU and the burst power supply module to supply power to the cabinet comprises:
detecting, by the PSU, that the transient power-supply event is a mains failure, and supplying, by the burst power supply module, power to the cabinet.

9. The method according to any one of claims 1 to 8, wherein the power supply system comprises a plurality of burst power supply modules, and the plurality of burst power supply modules are disposed in at least one unit of space in the cabinet.

10. The method according to claim 9, wherein the coordination between the PSU and the burst power supply module to supply power to the cabinet comprises:
supplying, by the plurality of burst power supply modules, power to a component in the cabinet based on parallel current sharing.

11. The method according to any one of claims 1 to 10, wherein the method further comprises:
obtaining, by the PSU, an overclocking operating signal of the device in the cabinet, and triggering the coordination between the PSU and the burst power supply module to supply power to the cabinet; or
obtaining, by the burst power supply module, a mains failure signal, and triggering the burst power supply module to supply power to the cabinet.

12. The method according to any one of claims 1 to 11, wherein the method further comprises:
detecting, by the PSU, that the transient power-supply event ends, supplying, by the PSU, power to the cabinet at a constant power, and storing, by the plurality of passive elements in the burst power supply module, electric energy.

13. A power supply system, wherein the power supply system comprises a power supply unit PSU and a burst power supply module, and the power supply system is configured to perform the operation steps of the method according to any one of claims 1 to 12.

14. The power supply system according to claim 13, wherein the burst power supply module comprises an energy storage unit, and the energy storage unit comprises a plurality of passive elements, wherein the energy storage unit stores electric energy by using the plurality of passive elements.

15. The power supply system according to claim 13 or 14, wherein the power supply system comprises a plurality of burst power supply modules, and the plurality of burst power supply modules are disposed in at least one unit of space in the cabinet.

16. A cabinet, wherein the cabinet comprises the power supply system according to any one of claims 13 to 15, and the power supply system is configured to perform the operation steps of the method according to any one of claims 1 to 12.
